# EUROPEAN PATENT APPLICATION

(11) **EP 3 176 071 A1**
(43) Date of publication of application: **07.06.2017**
(21) Application number: 15828164.2
(22) Date of filing: 20.07.2015
(51) Int. Cl.: B63H 21/38, F02M 21/02, F02M 37/04, F17C 7/02

(54) **SYSTEM AND METHOD FOR SUPPLYING FUEL**

(30) Priority: 31.07.2014 KR 20140098294
(71) Applicant: Daewoo Shipbuilding & Marine Engineering Co., Ltd., Seoul 100-180 (KR)
(72) Inventor: KIM, Dong Chan, Goyang-si, Gyeonggi-do 10556 (KR)
(74) Representative: Intès, Didier Gérard André
(86) International application number: PCT/KR2015/007497
(87) International publication number: WO 2016/017973

(57) **Abstract**

The present invention relates to a system and a method for supplying fuel and, more particularly, to a system and a method for supplying fuel, characterized in that LNG is pumped and supplied to a ship engine and, when the internal pressure of a pressure-resistant tank rises above the necessary pressure of the ship engine, the BOG is supplied to the ship engine, thereby controlling the internal pressure of the pressure-resistant tank, and an eductor is arranged at a point, at which lines that supply LNG and BOG join with each other, upstream of the ship engine such that the lines that supply LNG and BOG can be controlled simultaneously.

## Description

### [Technical Field]

The present invention relates to a fuel supply system and method, and, more particularly, to a fuel supply system and method which pumps LNG to a marine engine, and, when an internal pressure of a pressure-resistant tank is higher than a required pressure of the marine engine, BOG is supplied to the marine engine to control the internal pressure of the pressure-resistant tank, wherein an eductor is disposed at a point at which a BOG supply line meets an LNG supply line upstream of the marine engine to control the BOG supply line and the LNG supply line at the same time.

### [Background Art]

Recently, consumption of liquefied gas such as liquefied natural gas (LNG) and liquefied petroleum gas (LPG) has been rapidly increasing worldwide.

In particular, liquefied natural gas (hereinafter, "LNG") is an eco-friendly fuel with low emission of air pollutants during combustion and is increasingly used in various fields. LNG is a colorless transparent liquid which can be obtained by cooling natural gas containing methane as a main component to about -162°C and has a volume of about 1/600 that of natural gas. Thus, liquefaction of natural gas into LNG enables very efficient transportation of natural gas.

However, since the liquefaction temperature of natural gas is an extremely low temperature of -162°C at normal pressure, LNG is susceptible to temperature change and is easily evaporated. Although an LNG storage tank for an LNG carrier is insulated, external heat is continuously transferred to the storage tank. Thus, during transportation of LNG by an LNG carrier, the LNG is continuously naturally vaporized in the LNG storage tank to generate boil-off gas (BOG) in the storage tank.

BOG is a sort of LNG loss, which is an important problem in LNG transport efficiency. In addition, when BOG accumulates in an LNG storage tank, there is a risk that the pressure in the LNG storage tank rises excessively, causing damage to the tank. Therefore, various methods for treating BOG generated in an LNG storage tank have been studied.

Recently, for treatment of BOG, a method in which BOG is re-liquefied and returned to the storage tank, a method in which BOG is used as an energy source for a marine engine, and the like, have been employed. In addition, surplus BOG has been combusted in a gas combustion unit (GCU).

Further, there has been developed a dual fuel engine such as a dual fuel diesel electric engine (DFDE) or a dual fuel diesel generator (DFDG), which is fueled by both diesel fuel and gas generated by natural or forced evaporation of LNG in a propulsion device or a power generator of an LNG carrier.

### [Disclosure]

### [Technical Problem]

Since the amount of BOG generated varies depending on the amount of LNG stored in the storage tank, the internal pressure of the tank, and the like, it is desirable in terms of stable fuel supply that an engine using gas as a fuel also be fueled by LNG.

It is an aspect of the present invention to provide an efficient fuel supply system which can supply BOG generated from a storage tank as a fuel for a marine engine to maintain the internal pressure of the tank at a constant level while controlling supply of LNG and BOG at the same time as a fuel.

### [Technical Solution]

In accordance with one aspect of the present invention, there is provided a fuel supply system for a ship or an offshore structure, including:
a pressure-resistant tank storing LNG;
an LNG supply line SL for pumping the LNG from the pressure-resistant tank to a marine engine provided to the ship or the offshore structure;
a boil-off gas (BOG) vent line for supplying BOG generated from the pressure-resistant tank to the marine engine; and
an eductor disposed at a point at which the BOG vent line meets the LNG supply line upstream of the marine engine,
wherein, when an internal pressure of the pressure-resistant tank is higher than a required pressure of the marine engine, the BOG is supplied to the marine engine through the BOG vent line to control the internal pressure of the pressure-resistant tank.

Preferably, the LNG supply line is connected to a suction fluid connection of the eductor and the BOG vent line is connected to a motive fluid connection of the eductor.

Preferably, the LNG supply line SL is provided with a fuel supply pump for pumping LNG to increase pressure of the LNG to the required pressure of the marine engine and a shutoff valve for opening and closing the LNG supply line.

Preferably, the BOG vent line is provided with a pressure control valve for opening and closing the BOG vent line.

Preferably, the fuel supply system further includes a heater disposed downstream of the eductor to heat the LNG or the BOG depending upon a required temperature of the marine engine.

Preferably, the marine engine includes a dual fuel diesel generator (DFDG) supplied with a gas having a pressure of 3 bar to 15 bar.

Preferably, a design pressure of the pressure-resistant tank is set to be higher than an operating pressure of the marine engine and the pressure-resistant tank includes an independent IMO C-type tank.

In accordance with another aspect of the present invention, there is provided a fuel supply method for a marine engine, including:
pumping LNG from a pressure-resistant tank to the marine engine,
wherein, when an internal pressure of the pressure-resistant tank is higher than a required pressure of the marine engine, BOG is supplied to the marine engine to control the internal pressure of the pressure-resistant tank, and
wherein an eductor is disposed at a point at which a BOG supply line meets an LNG supply line upstream of the marine engine to control the BOG supply line and the LNG supply line at the same time.

Preferably, the LNG supply line from the pressure-resistant tank is connected to a suction fluid connection of the eductor and the BOG supply line is connected to a motive fluid connection of the eductor.

### [Advantageous Effects]

According to the present invention, it is possible to provide a fuel supply system which pumps LNG to a marine engine, and, when an internal pressure of a pressure-resistant tank is higher than a required pressure of the marine engine, BOG is supplied to the marine engine to control the internal pressure of the pressure-resistant tank, wherein an eductor is disposed at a point at which a BOG vent line meets an LNG supply line upstream of the marine engine to control the respective lines for supplying BOG and LNG at the same time.

In addition, according to the present invention, it is possible to provide a fuel supply system which can maintain the internal pressure of a storage tank at a constant level during operation of a ship to secure safety of the ship while effectively controlling LNG fueling and BOG fueling at the same time.

### [Description of Drawings]

Fig. 1 is a schematic view of a fuel supply system according to one embodiment of the present invention.
Fig. 2 is an enlarged view of an eductor of the fuel supply system shown in Fig. 1.

### [Best Mode]

The above and other aspects, features, and advantages of the present invention will become apparent from the detailed description of the following embodiments in conjunction with the accompanying drawings.

Hereinafter, exemplary embodiments of the present invention will be described in detail with reference to the accompanying drawings. It should be noted that like components will be denoted by like reference numerals throughout the specification and the accompanying drawings.

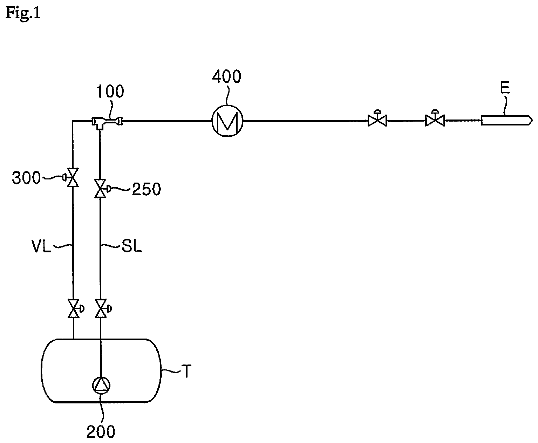

Fig. 1 is a schematic view of a fuel supply system according to one embodiment of the present invention.

A ship or an offshore structure to which this embodiment is applied refers to ships and special ships using LNG as a fuel, specifically ships equipped with a marine power generation engine or propulsion engine fueled by LNG.

Referring to Fig. 1, the fuel supply system according to this embodiment is a system for supplying a fuel to a marine engine E provided to a ship or an offshore structure and includes a pressure-resistant tank T storing LNG, an LNG supply line SL for pumping LNG from the pressure-resistant tank T to the marine engine E, a BOG vent line VL for supplying boil-off gas (BOG) generated in the pressure-resistant tank T to the marine engine, and an eductor 100 disposed at a point where the BOG vent line VL meets the LNG supply line SL upstream of the marine engine E.

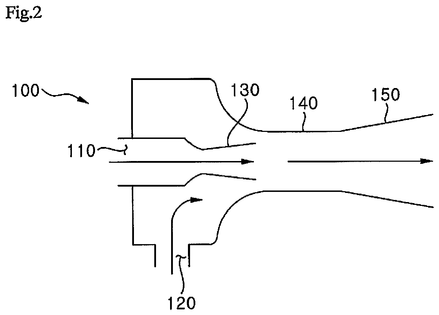

Fig. 2 is an enlarged view of the eductor 100 according to this embodiment.

Particularly, according to this embodiment, the LNG supply line SL is connected to a suction fluid connection 120 of the eductor 100 and the BOG vent line VL is connected to a motive fluid connection 110 of the eductor 100, such that the LNG supply line SL and the BOG vent line VL can be simultaneously controlled through the eductor 100. Referring to Fig. 2, the eductor includes a nozzle 130 through which a motive fluid is injected, a mixing section 140 in which the motive fluid is mixed with a suction fluid, and a diffuser 150.

According to this embodiment, normally, LNG is pumped from the tank to the marine engine E through the LNG supply line SL and BOG generated in the tank is retained in the tank. When an internal pressure of the pressure-resistant tank T becomes higher than a required pressure of the marine engine E, the BOG is supplied to the marine engine E through the BOG vent line VL to control the internal pressure of the pressure-resistant tank T. That is, the BOG is supplied to the marine engine E through the BOG vent line VL to reduce the pressure in the pressure-resistant tank T, thereby maintaining the pressure of the tank at a constant level during operation of the ship while fueling the marine engine.

If the eductor is absent, the LNG supply line SL and the BOG vent line VL must not be operated at the same time since, when the LNG supply line SL and the BOG vent line VL are opened at the same time without the eductor, there is a risk that a liquid supplied as a fuel will flow back to the BOG vent line VL. For example, assuming that the pressure of the tank is 5 bar, which is equal to the pressure of the BOG vent line VL, the LNG supply line SL will have a pressure of 5 bar plus a pump head pressure. Thus, when the LNG supply line SL and the BOG vent line VL are opened at the same time without the eductor, a liquid supplied as a fuel is likely to flow back to the BOG vent line VL.

However, according to this embodiment, the pressure of the tank from which LNG is supplied can be controlled through the eductor at any time, whereby it is possible to simultaneously open the LNG supply line SL and the BOG vent line VL to supply fuel.

The marine engine E according to this embodiment may be a DF engine such as a dual fuel diesel generator (DFDG) or a dual fuel diesel electric engine (DFDE). Since a DF engine is an engine fueled by both heavy oil and natural gas and emits exhaust gas with relatively low sulfur oxide content due to low content of sulfur in fuel, as compared with an engine fueled by heavy oil alone, it is possible to meet international exhaust emission standards for ships. Although an operating pressure of the DF engine may vary depending on the licensor and size, the DF engine is generally supplied with natural gas having a pressure of 2.5 bara to 15 bara, preferably 5 bara to 8 bara. More preferably, the marine engine E according to this embodiment is a dual fuel diesel generator (DFDG) supplied with natural gas having a pressure of 6 bara to 8 bara.

For fuel supply to the marine engine E, the LNG supply line SL is provided with a fuel supply pump 200 for pumping LNG to increase a pressure of the LNG to a required pressure of the marine engine E and a shutoff valve 250 for opening and closing the LNG supply line SL. When the internal pressure of the pressure-resistant tank T is normally lower than the required pressure of the engine, the LNG pumped by the fuel supply pump 200 is supplied as a fuel to the marine engine E through the LNG supply line SL.

A heater 400 for heating LNG or BOG depending upon the required temperature of the marine engine E is disposed downstream of the eductor 100, wherein the pumped LNG is supplied to the marine engine E through the heater 400.

The heater 400 heats LNG to a temperature of -30°C to 80°C, preferably 0°C to 60°C using a heating medium such as steam or glycol water.

A design pressure of the pressure-resistant tank T is set to be higher than the operating pressure of the marine engine E. Particularly, in the case of a small ship, it may be desirable that the ship be provided with an independent IMO C-type tank having a design pressure set to retain BOG or flash gas generated in the pressure-resistant tank T during operation of the ship. When the marine engine E is a DF engine such as a DFDE or DFDG, the design pressure of the pressure-resistant tank T may be set to a gauge pressure of 2 bar or more, preferably 3 bar to 30 bar, more preferably 7 bar to 15 bar to retain BOG generated in the tank and to supply the BOG as a fuel at an operating pressure required for the marine engine E while maintaining the pressure of the tank at a constant level.

The BOG vent line VL is provided with a pressure control valve 300 for opening and closing the BOG vent line VL to maintain the pressure of the tank while supplying the BOG to the marine engine E.

As described above, according to this embodiment, for fuel supply to the marine engine E, normally, LNG is pumped from the pressure-resistant tank T to the marine engine E such as a DFDG, and, when the internal pressure of the pressure-resistant tank T becomes higher than the required pressure of the marine engine E, BOG is supplied to the marine engine E to control the internal pressure of the pressure-resistant tank T, thereby securing safety of the tank while fueling the engine.

Particularly, the eductor 100 is disposed at a point at which the LNG supply line meets the BOG supply line upstream of the marine engine E to simultaneously control the LNG supply line and the BOG supply line and to allow the fuel supply operation to be divided into system operation and fueling operation, thereby extending service life of devices such as valves and the like. In addition, LNG and BOG can be continuously supplied as a fuel.

Although some embodiments have been described herein, it should be understood that these embodiments are provided for illustration only and are not to be construed in any way as limiting the present invention, and that various modifications, changes, alterations, and equivalent embodiments can be made by those skilled in the art without departing from the spirit and scope of the invention.

## Claims

1. A fuel supply system, comprising:
a pressure-resistant tank for storing LNG provided to a ship or an offshore structure;
an LNG supply line for pumping the LNG from the pressure-resistant tank to a marine engine provided to the ship or the offshore structure;
a boil-off gas (BOG) vent line for supplying BOG generated from the pressure-resistant tank to the marine engine; and
an eductor disposed at a point at which the BOG vent line meets the LNG supply line upstream of the marine engine,
wherein, when an internal pressure of the pressure-resistant tank is higher than a required pressure of the marine engine, the BOG is supplied to the marine engine through the BOG vent line to control the internal pressure of the pressure-resistant tank.

2. The fuel supply system according to claim 1, wherein the LNG supply line is connected to a suction fluid connection of the eductor and the BOG vent line is connected to a motive fluid connection of the eductor.

3. The fuel supply system according to claim 2, wherein the LNG supply line is provided with a fuel supply pump for pumping LNG to increase pressure of the LNG to the required pressure of the marine engine and a shutoff valve for opening and closing the LNG supply line.

4. The fuel supply system according to claim 3, wherein the BOG vent line is provided with a pressure control valve for opening and closing the BOG vent line.

5. The fuel supply system according to claim 4, further comprising:
a heater disposed downstream of the eductor to heat the LNG or the BOG depending upon a required temperature of the marine engine.

6. The fuel supply system according to claim 1, wherein the marine engine comprises a dual fuel diesel generator (DFDG) supplied with a gas having a pressure of 3 bar to 15 bar.

7. The fuel supply system according to claim 1, wherein a design pressure of the pressure-resistant tank is set to be higher than an operating pressure of the marine engine and the pressure-resistant tank comprises an independent IMO C-type tank.

8. A fuel supply method for a marine engine, comprising:
pumping LNG from a pressure-resistant tank to the marine engine,
wherein, when an internal pressure of the pressure-resistant tank is higher than a required pressure of the marine engine, BOG is supplied to the marine engine to control the internal pressure of the pressure-resistant tank, and
wherein an eductor is disposed at a point at which a BOG supply line meets an LNG supply line upstream of the marine engine to control the BOG supply line and the LNG supply line at the same time.

9. The fuel supply method according to claim 8, wherein the LNG supply line from the pressure-resistant tank is connected to a suction fluid connection of the eductor and the BOG supply line is connected to a motive fluid connection of the eductor.
